# EUROPEAN PATENT APPLICATION

(11) **EP 1 478 176 A2**
(43) Date of publication of application: **17.11.2004**
(21) Application number: 04368040.4
(22) Date of filing: 13.05.2004
(51) Int. Cl.: H04N 5/335

(54) **Method and apparatus for a simultaneous multi-field-of-view imager using digital subsampling and sub-window selection**

(30) Priority: 13.05.2003 US 470147; 23.12.2003 US 744565
(71) Applicant: Dialog Semiconductor GmbH, 73230 Kirchheim/Teck-Nabern (DE)
(72) Inventor: Wixson, Lambert Ernest, Goldens Bridge, NY 10526 (US); Vanderwal, Gooitzen Siemen, Hopewell, NJ 08525 (US); Dawson, Robin Mark Adrian, Princeton, NJ 08540 (US); McCaffrey, Nathaniel Joseph, Stockton, NJ 08559 (US)
(74) Representative: Schuffenecker, Thierry

(57) **Abstract**

A new method and device to generate two field of view images from a sensor pixel array is achieved. The method comprises providing an array of sensing pixels. An array digital data stream is generated by sequentially generating a plurality of digital data streams each corresponding to blocks of the sensing pixels in the array. All the sensing pixels in any block are sampled simultaneously. First and second digital video streams are generated from the array digital data stream. The first and second digital video streams comprise first and second fields of view of the array, respectively. Each pixel of the first digital video stream corresponds to a filtered and sub-sampled combination of more than one of the sensing pixel samples.

## Description

### Technical field

The invention relates to the design of a high-resolution imager, and, more particularly, to an imager that simultaneously outputs a wide range window and a high-resolution window.

### Background Art

It is often desirable to provide both a wide field of view and a high resolution of a scene recorded by a video camera. This has been accomplished in the art by using two cameras: a wide-angle camera and a high resolution camera used in combination with motorized platforms. These methods suffer from the disadvantage of the extra cost incurred by a second camera and associated hardware, such as rotating platforms.

Several prior art inventions relate to imaging systems. U.S. Patent 5,926,218 to Smith teaches a camera with a first, low resolution sensor to generate a view finder image and a second, high resolution image sensor to generate a high resolution image. U.S. Patent 5,532,737 to Braun describes a video camera system where multiple cameras are positioned to receive different fields of view of the same image via a mirror system. U.S. Patent 5,065,024 to McCollough describes an infrared imaging system. The system is capable of variable field of view. A series of detectors are interchangeably used to provide the variable field of view. U.S. Patent 5,023,719 to Zwirn teaches a method to provide multiple real-time images from an infrared camera.

### Summary of the invention

A principal object of the present invention is to provide an effective and very manufacturable imager architecture.

A further object of the present invention is to provide a method to generate both a wide field of view and high resolution using a single camera without the need for a motorized platform.

A further object of the present invention is to provide a method to generate multiple fields of view using a single sensor array.

A yet further object of the present invention is to provide a method to generate multiple fields of view from a single sensor array by filtering and sub-sampling and by using a plurality of analog-to-digital converters.

A yet further object of the present invention is to provide a method which does not require a separate processor.

A yet further object of the present invention is to an imager capable of multiple fields of view without motorized platforms of optics.

In accordance with the objects of this invention, a method to generate two field of view images from a sensor pixel array is achieved. The method comprises providing an array of sensing pixels. An array digital data stream is generated by sequentially generating a plurality of digital data streams each corresponding to blocks of the sensing pixels in the array. All the sensing pixels in any block are sampled simultaneously. First and second digital video streams are generated from the array digital data stream. The first and second digital video streams comprise first and second fields of view of the array, respectively. Each pixel of the first digital video stream corresponds to a filtered and sub-sampled combination of more than one of the sensing pixel samples.

Also in accordance with the objects of this invention, an imager device with first and second fields of view is achieved. The device comprises an array of sensing pixels and a plurality of analog-to-digital converters. A means is included to generate an array digital data stream by sequentially generating a plurality of digital data streams each corresponding to blocks of the sensing pixels in the array. All the sensing pixels in any block are sampled simultaneously by the analog-to-digital converters. A first field of view readout block generates a first digital video stream from the array digital data stream. The first digital video stream comprises a first field of view of the array. Each pixel of the first digital video stream corresponds to a filtered and sub-sampled combination of more than one of the sensing pixel samples. A second field of view readout block generates a second digital video stream from the array digital data stream. The second digital video stream comprises a second field of view of the array.

### Description of the drawings

In the accompanying drawings forming a material part of this description, there is shown:
Fig. 1 illustrates a preferred embodiment of the present invention showing a block diagram of a multiple field of view imager.
Fig. 2 illustrates the preferred embodiment showing wide field of view and narrow field of view processing.
Fig. 3 illustrates a preferred embodiment showing, in block diagram form, a system for parallel readout of small blocks of interleaved pixels.
Fig. 4 illustrates a preferred embodiment showing, in block diagram form, a system for parallel readout of small blocks of non-interleaved, or tiled, pixels.
Fig. 5 illustrates a preferred embodiment showing, in flow diagram form, a system for filtering the interleaved pixel readout.
Fig. 6 illustrates a preferred embodiment showing, in flow diagram form, a system for filtering the tiled pixel readout.

### Description of the preferred embodiments

The preferred embodiments of the present invention disclose a novel imaging method and device. An imager is achieved that can provide both narrow and wide fields of view from a single sensor array without motorized optics or platform. It should be clear to those experienced in the art that the present invention can be applied and extended without deviating from the scope of the present invention.

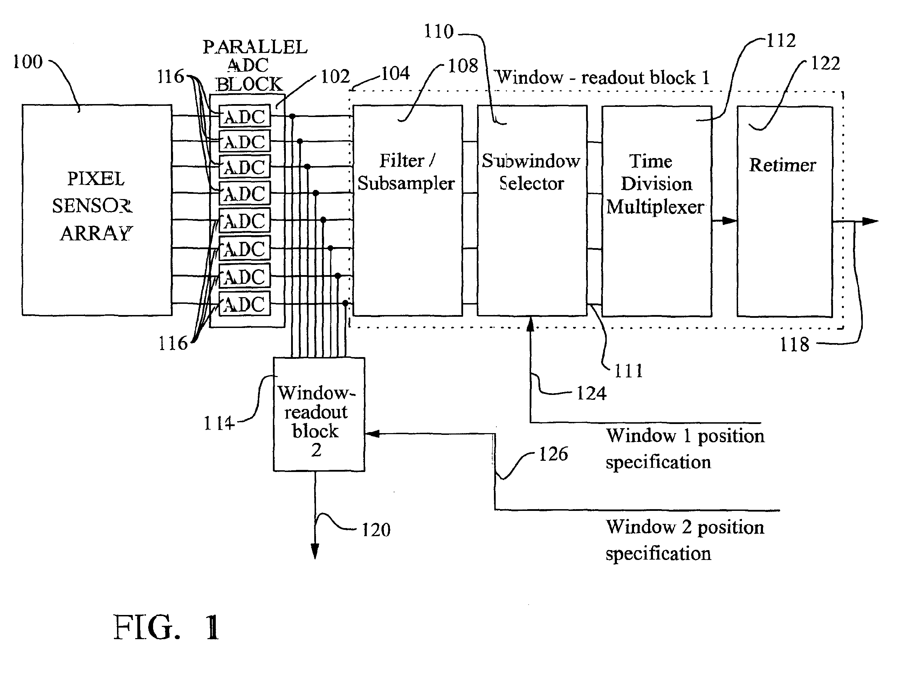

Referring now to Figs. 1 through 6, the multiple field of view imager of the present invention is illustrated and is discussed below. Referring particularly, to Fig. 1, a block diagram of a preferred embodiment of a multiple field of view imager of the present invention is shown. The device comprises a pixel sensor array 100, a plurality of analog-to-digital converters 116 in an ADC block 102, and two window readout blocks 104 and 114. The pixel sensor array 100 is a well known element in the art comprising a material, such as semiconductor material, that converts incident light into an electrical signal. The array 100 comprises a large number of individual pixels such that images in the incident light can be decoded. Typically the pixels each generate an analog voltage proportional to the intensity of the incident light. The analog imager pixel values are converted to digital values using the parallel analog to digital converter (ADC) block 102. The parallel ADC block 102 has a number of analog to digital converters (ADC) sub-blocks 116 in parallel, each of which converts a subset, or block, of pixels in the pixel sensor array 100. Eight ADC sub-blocks 116 are shown in Fig. 1. The use of ADC sub-blocks 116 in parallel in the ADC block 102 enables high resolution imagers, such as in the case of 2K x 2K pixels, to be rapidly read. Furthermore, as more parallel ADC sub-blocks 116 are used, yielding yet more parallel processing, each of the ADC sub-blocks 116 can be run at a slower clock rate. The slower the clock rate, the greater the precision that can be obtained from each ADC sub-block 116.

The analog-to-digital converters simultaneously sample each pixel in the block (in this case up to eight pixels at a time) to generate a digital stream for the block. The digital streams from the ADC block 102 are then sent to two or more sets of window readout blocks 104 and 120. The blocks of pixels are sequentially sampled by the ADC block 102 such that the entire pixel array 100 is digitally converted on a periodic basis as a frame. The cumulative series of block digital streams generated (as parallel outputs of the ADC block 102) form an array digital stream for the entire array on each frame sampled.

Two window readout blocks are shown in Fig. 1, a first window readout block 104 and a second window readout block 114. Each "window" corresponds to a field of view of the pixel sensor array. The first window readout block 104 controls a first field of view, and the second window readout block 114 controls a second field of view. The window readout blocks 104 and 114 each may comprise sub-blocks such as a filter/sub-sampler 108, a sub-window selector 110, a time division multiplexer 112, and a re-timer 122. A window readout block 104 and 114 does not necessarily need to contain all of these blocks, however. In the example shown in Fig. 1, the first window readout block 104 shows all the sub-blocks: filter/sampler 106, sub-window selector 108, time division multiplexer 110, and re-timer 112. The outputs 118 and 120 of the window readout blocks 104 and 114 are sequential streams of samples representing the pixel values that lie in the specified sub-window, in raster scan order.

The window readout circuits 104 and 114 control the windows that are output from the imager. It is often undesirable for the imager to output all pixel values. For example, a high resolution imager outputting 2K x 2K pixels for each frame at 30 frames/second would have to be read and processed at 126 megahertz (MHz). This computational capability would require costly hardware. Furthermore, video at this resolution is not compatible with most existing monitors, video recorders, and processing devices most of which will be at a VGA resolution of 648 x 480. The sub-window selector 110 controls sub-windows of the pixel sensor array 100 which will be output to the first digital video stream 118. Window position specification lines 124 and 126 determines the windows to be selected. The purpose of the window readout blocks 104 and 114 is to allow selected regions of the imager area, which may be larger than the desired resolution, to be output at the desired resolution.

For an explanation of the operation of the window readout blocks refer to the first window readout block 104. First the parallel, block digital streams from the ADCs 116 are read by the filter/subsampler 108. This block contains filtering circuitry that applies a digital spatial filter to the pixel values (possibly in parallel) and then sub-samples them. The purpose of the filtering is to minimize spatial aliasing in the image that may be induced by the sub-sampling. The filter/sub-sampler 108 outputs the samples on one or more parallel channels 111. The filter/sub-sampler 108 serves a similar purpose as a video scalar chip, but, for processing speed reasons, the filter/sub-sampler must be implemented using parallel input streams rather than a sequential stream as is standard practice. Furthermore, it is important to note that in some cases the filter/sub-sampler 108 may be implemented using pipelined filter stages rather than performing it using just a single stage. Such a multiple stage design may be desirable if the imager circuitry is too big to fit on a single chip and hence must be split across two chips or if it is desirable to use an existing filtering chip with the imager.

The output of the filter/sub-sampler 108 is sent to the sub-window selector 110 that selects those samples contained in the desired sub-window. The output from the sub-window selector 110 is then processed by a time-division multiplexer 112 that interleaves the selected samples from the parallel streams into a single sequential stream in which the samples appear in raster order. The sub-window selector 110 allows the sub-window to be externally specified using the window position specification line 124. This specification may be provided by a human operator or by an automatic program and can be changed on each frame. By shifting the sub-window from from frame-to-frame, one obtains a digital pan/tilt mechanism. The re-timer block 122 converts the digital pixel stream that is output from the time-division multiplexer 112 to a timing format that is compatible with video inputs for standard devices such as digitizers or video recorders. The re-timer 122 is only necessary if a sub-window selector 110 is utilized because the timing of the output of the sub-window selector 110 will depend on the position of the sub-window with respect to the pixel sensor array.

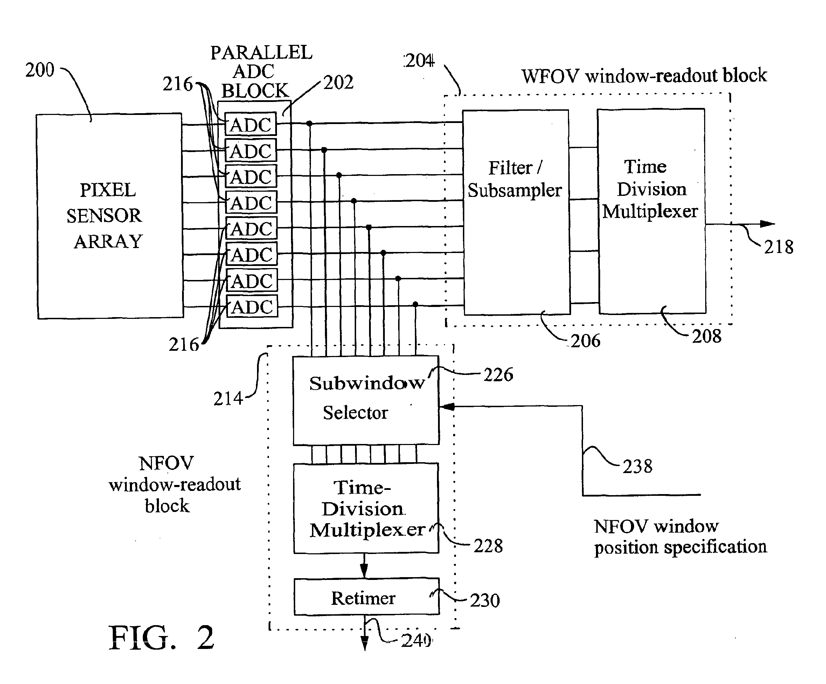

Referring now to Fig. 2, a more specific embodiment of the above described design is shown. A high-resolution digital pan/tilt imager having a pixel sensor array 200 with, for example, 2560 x 1920 pixels with two image readouts, a wide field-of-view (WFOV) readout 218 and a narrow field-of-view (NVOF) readout 240. These image readouts 218 and 240, or digital video streams, correspond to a WFOV block 204 and a NFOV block 214, respectively.

The WFOV video output 218 is a video stream of the entire imager field-of-view, but at a lower sampled resolution, typically 640 x 480 samples, or approximately 1 sample for every 4 pixels. This number of samples is computationally cheaper to process than the 2560 x 1920 samples that would result if the WFOV were sampled at the highest rate of 1 sample for every pixel. To generate this output, the WFOV window readout block 204 comprises a filter/sub-sampler 206 and a time-division multiplexer 208. No sub-window selector and no re-timer are necessary because the WFOV output 218 is intended to cover the entire image area of the sensor array 200. The NFOV readout 240 is preferably a sub-window of typically 640 x 480 samples of the imager that is obtained at the original highest sampling rate of, for example, 1 sample for every pixel in the array 200. Thus, the NFOV window-readout block 214 consists simply of a sub-window selector 226, a time-division multiplexer 228, and a re-timer 230. The original pixel resolution is retained so that no filter/sub-sampler is necessary.

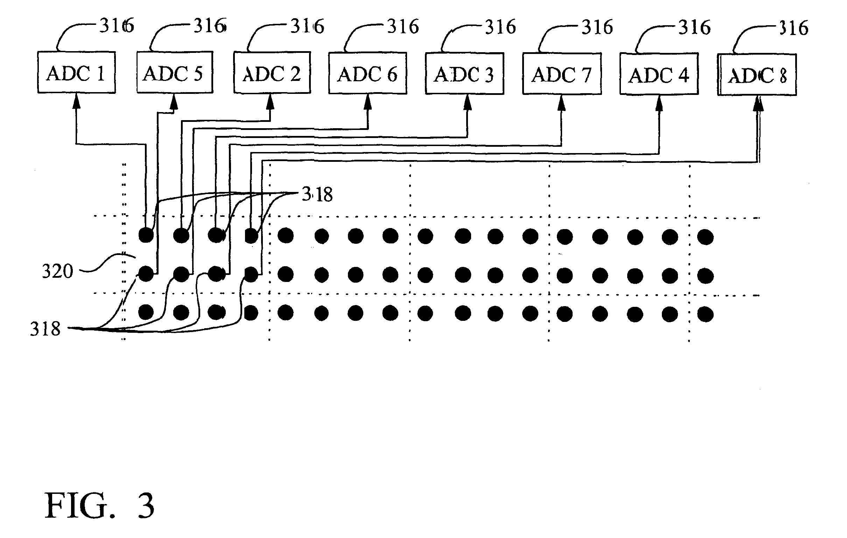

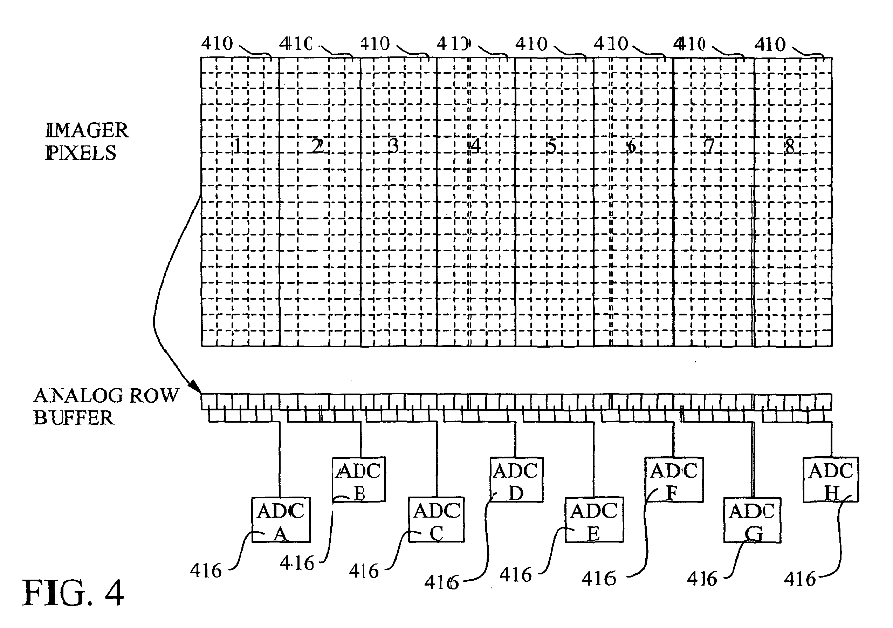

In this case, the analog pixels are converted to digital values using eight ADCs 216 in parallel. If the ADCs run at 20 MHz, this means that an entire 2560 x 1920 pixel array can be read in less than one frame time of 33 milliseconds. The design of the filter/sub-sampler depends greatly on the spatial pattern from which the ADCs read their pixel values on the imager. Two basic readout designs are shown in Figs. 3 and 4.

Referring particularly to Fig. 3, the ADCs 316 are arranged to digitize small blocks 320, in this case, measuring 4 x 2 pixels, in parallel with each ADC handling a separate pixel in the block 320 so that interleaved pixels are read by different ADCs. This type of design is referred to as an interleaved ADC design. Referring to Fig. 4, each ADC 416 is responsible for a set of non-interleaved pixels 410 so that each ADC 416 effectively images an image tile. This type of design is referred to as a tiled ADC design. Each ADC samples a part of a row or a part of a column as a 1 x m sample as shown.

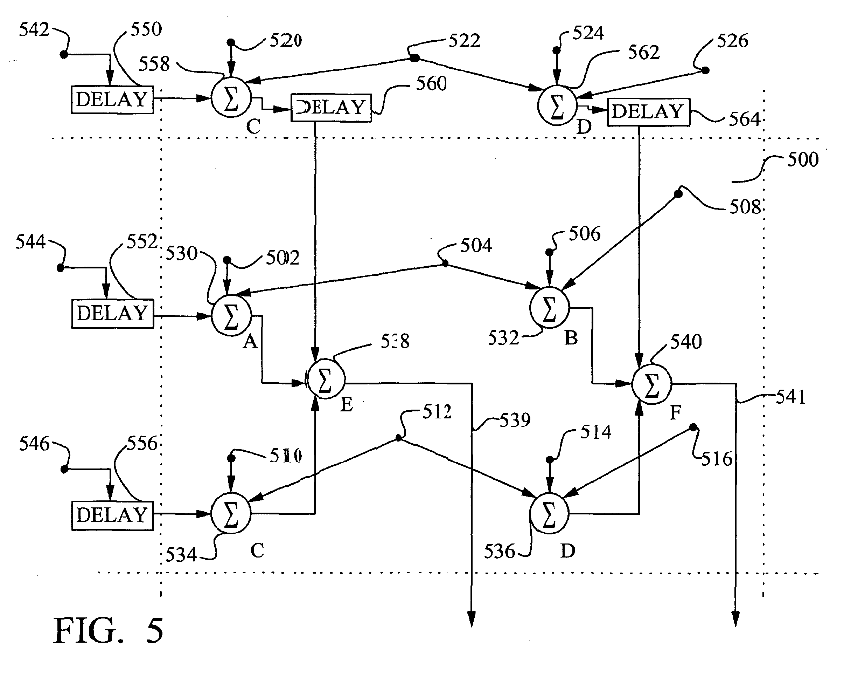

For both the interleaved ADC and the tiled ADC designs, the filter/sub-sampler applies a set of filter circuits in parallel. For the interleaved ADC design shown in Fig. 3, each ADC 316 connects to a pixel 318 in the block, or filter neighborhood 320, as well as any values that were read and stored when previous adjacent blocks were read. Referring now to Fig. 5, a design for filtering the interleaved 4 x 2 readout of Fig. 3 is shown symbolically. The block 500 comprises the 4 x 2 array of pixels 502, 504, 506, 508, 510, 512, 514, and 516. A 3 x 3 separable filter, where the filter sub-sampler contains six filter circuits, is used. The filter comprises filters A 530, B 532, C 534, D 536, E 538, and F 540. Filters A-D perform 3-tap horizontal filtering, while filters E and F perform 3-tap vertical filtering. Each filter circuit may contain circuitry for multiplication by the filter tap weights, summation, rounding, clipping, and scaling. The outputs 539 and 541 of filters E 538 and F 540 are the outputs of the filter/sub-sampler block. This design performs sub-sampling by a factor of 2 both horizontally and vertically. Obviously, this connectivity must be altered if filters with a larger neighborhood are used, or a different sampling rate is desired. Surrounding pixels 542, 544, 546, 520, 522, 524, and 526, and filter models 558 and 562 are shown. Note that the surrounding pixels values are incorporated using delay models 550, 552, 556, 560, and 564.

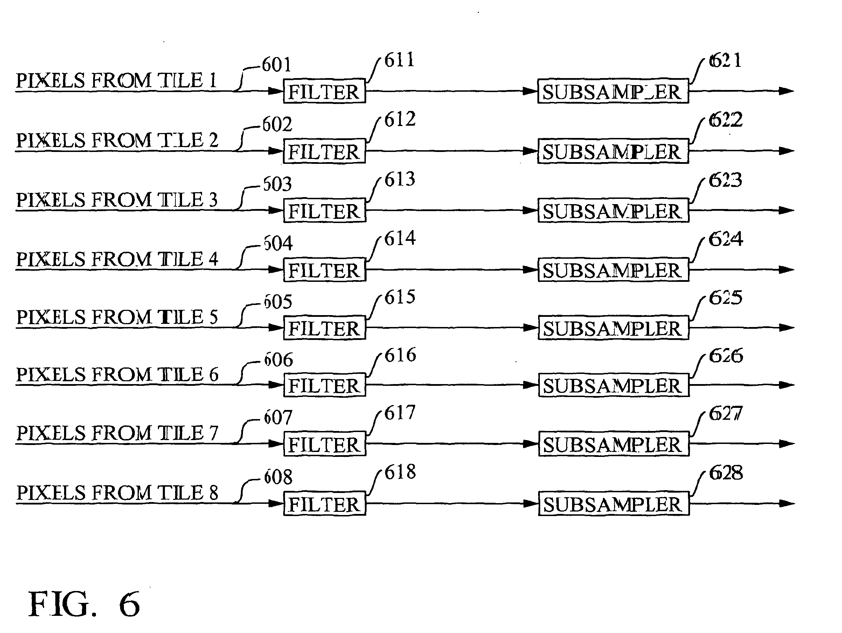

Referring now to Fig. 6, the filter/sub-sampler design for the tiled-ADC design is shown symbolically. The tiled design is as shown in Fig. 4. Referring again to Fig. 6, there is a filter circuit 611-618 and sub-sampler 621-628 for each tile 601-608. This design is straightforward, although special care is required to handle the edges where two tiles abut.

As mentioned above, in some cases the filter/subsampler block may be implemented using pipelined filter stages rather than performing it using just a single stage. As mentioned above, this can occur when the circuitry to perform the filtering is too large to fit on the imager chip. Such a situation may occur when it is desirable to filter the image using large vertical neighborhoods. Since each additional vertical row included in a filter involves a line delay, it is the vertical extent of a filter that largely dictates the amount of circuitry needed to implement the filter. Therefore, it may be desirable to use a multiple stage filter design that operates in multiple filter/subsample stages. For example, suppose it is desirable to operate a filter with k taps in each direction. Applying this filter to the full resolution image of width w would require k-1 delay lines for a total of (k-1)w memory elements. Depending on the filter, it may be possible to approximate it by first applying a filter with m+1 taps at full image resolution. Here k and n are assumed to be odd and m is assumed to be even. Such a design would have a total of mw + (w/2) memory elements. Typically, n might be chosen to satisfy the equation n + n - 1 + m = k. In this case the total number of memory elements used for delay lines would then be (k/4 + 3m/4 + 1/4)w, which depending on the specific values of k and m may be a substantial savings. For example, if k = 11 and m = 2 and n = 5, this would require only 4.5w instead of 10w memory elements for delay lines.

A further point to note about multiple stage implementations of the filter/sub-sampler is that a time division multiplexer may be part of one of the stages. This is likely to be useful when the clock rate of the circuits used to implement one of the later stages is fast enough to handle the rate at which samples flow within the time-multiplexed stream. For example, consider the problem in which the goal is to apply an 11-tap filter to an imager of frame size w x h and the subsample by a factor of 4. Depending on the desired filter, this problem may be decomposable into two stages. The first stage applies a 3-tap filter and subsamples by a factor of 2. The second stage applies a 9-tap filter and subsamples by a further factor by 2. If the circuitry for the second stage is capable of handling sequential data at a rate of (w/2) x (h/2) x f, where f is the frame rate of the imager, then the second stage may be implemented using only a single filter. Therefore, a time-division multiplexer may be placed at the output of the first stage to construct the sequential stream.

Referring again to Fig. 2, the NFOV window-readout block 214 is shown. In this block, the sub-window selector 226 takes the parallel data streams from the A/D block 202 and selects pixels contained in the desired sub-window. The time division multiplexer 228 then outputs those selected pixels in raster order, and the retimer 230 retimes these signals to coincide with the beginning of a frame time for output to the NFOV output line 240. The desired sub-window is specified externally by either a human operator or by an automatic program using the NFOV window position specification line 238, and can be changed for each frame. By shifting the sub-window from frame to frame, one obtains a digital pan/tilt mechanism.

An example application of such a system is an imaging system that monitors the WFOV output image to detect and track movement and then specifies the NFOV window so that it lies on the location or predicted location of the moving object. The NFOV can then be sent to a monitor for human inspection of can be further processed by additional automated mechanisms. One such additional mechanism that may be of particular utility is an "unwarping" circuit. A common practice in security cameras is to use an imaging configuration that maximizes the amount of angle imaged by the camera as in, for example, a "fisheye lens." Unfortunately, these imaging configurations usually result in very distorted images. Although this distorted image is difficult for humans to interpret, it is still possible for automated computer programs to operate on such images. If an automated means, for example, detected motion in the distorted image, and the NFOV window was positioned to read the appropriate sub-window from the distorted image, then subsequent processing could be used to "unwarp" this distortion, resulting in an undistorted high-resolution window imaging the moving object of interest.

The imager design described above may be implemented using many different physical forms. First, the analog imager block 200 may be composed of any sensing technology that can be converted to digital values. Second, the internal structure of the parallel ADC block 202 may vary. Third, the window-readout blocks may be implemented on the same chip as the imager block 200 or on a separate chip, and different components within a window-readout block may reside on the same chip or on different chips. Further, the circuits for performing the filter/sub-sampler 206, the sub-window selector 226, and the time-division multiplexer 208 and 228 need not exist separately and may be combined within an integrated design.

The advantages of the present invention may now be summarized. An effective and very manufacturable imager architecture is provided. A method to generate both a wide field of view and high resolution using a single camera without the need for a motorized platform is realized. The method to generate multiple fields of view uses a single sensor array. The method to generate multiple fields of view from a single sensor array is by filtering and sub-sampling and by using a plurality of analog-to-digital converters. The method which does not require a separate processor. An imager capable of multiple fields of view without motorized platforms of optics is achieved.

As shown in the preferred embodiments, the novel method and device) of the present invention provide an effective and manufacturable alternative to the prior art.

## Claims

1. A method to generate two field of view images from a sensor pixel array, said method comprising:
- providing an array of sensing pixels;
- generating an array digital data stream by sequentially generating a plurality of digital data streams each corresponding to blocks of said sensing pixels in said array wherein all said sensing pixels in any said block are sampled simultaneously; and
- generating first and second digital video streams from said array digital data stream wherein said first and second digital video streams comprise first and second fields of view of said array, respectively, and wherein each pixel of said first digital video stream corresponds to a filtered and sub-sampled combination of more than one said sensing pixel samples.

2. The method according to Claim 1 wherein said first field of view comprises the entire said array.

3. The method according to Claim 2 wherein said second field of view comprises a part of said entire array.

4. The method according to Claim 3 wherein the location of said second field of view with respect to said entire array is movable.

5. A method to generate two field of view images from a sensor pixel array, said method comprising:
- providing an array of sensing pixels;
- generating an array digital data stream by sequentially generating a plurality of digital data streams each corresponding to blocks of said sensing pixels in said array wherein all said sensing pixels in any said block are sampled simultaneously; and
- generating first and second digital video streams from said array digital data stream wherein said first and second digital video streams comprise first and second fields of view of said array, respectively, wherein each pixel of said first digital video stream corresponds to a filtered and sub-sampled combination of more than one said sensing pixel samples, wherein said first field of view comprises entire said array, wherein said second field of view comprises a part of said entire array, and wherein the location of said second field of view with respect to said entire array is movable.

6. The method according to Claim 2 or 5 wherein each said sensing pixel block comprises an n x m array and wherein said n and m are each greater than one.

7. The method according to Claim 2 or 6 wherein said filtering comprises multiple-tap horizontal filtering and multiple-tap vertical filtering of said block digital data stream.

8. The method according to Claim 2 or 6 wherein said filtering comprises multiplication by filter tap weights, summation, rounding, clipping, or scaling.

9. The method according to Claim 2 or 6 wherein said sub-sampling is performed in either the column direction or the row direction of said array.

10. The method according to Claim 2 or 5 wherein each said sensing pixel block comprises an 1 x m array and wherein said m is each greater than one.

11. The method according to Claim 3 or 5 wherein each pixel of said second digital video stream corresponds to a single said sensing pixel sample.

12. The method according to Claim 4 or 5 wherein said location of said second field of view with respect to said entire array is movable every frame.

13. The method according to Claim 3 or 5 further comprising a step of re-timing said second digital video stream to the top of a video frame.

14. An imager device with first and second fields of view, said device comprising:
- an array of sensing pixels;
- a plurality of analog-to-digital converters;
- a means to generate an array digital data stream by sequentially generating a plurality of digital data streams each corresponding to blocks of said sensing pixels in said array wherein all said sensing pixels in any said block are sampled simultaneously by said analog-to-digital converters;
- a first field of view readout block to generate a first digital video stream from said array digital data stream wherein said first digital video stream comprises a first field of view of said array and wherein each pixel of said first digital video stream corresponds to a filtered and sub-sampled combination of more than one said sensing pixel samples; and
- a second field of view readout block to generate a second digital video stream from said array digital data stream wherein said second digital video stream comprises a second field of view of said array.

15. The device according to Claim 14 wherein said first field of view comprises entire said array.

16. The device according to Claim 15 wherein each said sensing pixel block comprises an n x m array and wherein said n and m are each greater than one.

17. The device according to Claim 16 wherein said filtering comprises multiple-tap horizontal filtering and multiple-tap vertical filtering of said block digital data stream.

18. The device according to Claim 16 wherein said filtering comprises multiplication by filter tap weights, summation, rounding, clipping, or scaling.

19. The device according to Claim 16 wherein said sub-sampling is performed in either the column direction or the row direction of said array.

20. The device according to Claim 14 wherein each said sensing pixel block comprises an 1 x m array and wherein said m is each greater than one.

21. The device according to Claim 14 wherein said second field of view comprises a part of said entire array.

22. The device according to Claim 21 wherein each pixel of said second digital video stream corresponds to a single said sensing pixel sample.

23. The device according to Claim 21 wherein the location of said second field of view with respect to said entire array is movable.

24. The device according to Claim 23 wherein said location of said second field of view with respect to said entire array is movable every frame.

25. The device according to Claim 21 wherein said second field of view readout block re-times said second digital video stream to the top of a video frame.
